# EUROPÄISCHE PATENTSCHRIFT

(11) **EP 3 179 548 B1**
(45) Veröffentlichungstag und Bekanntmachung des Hinweises auf die Patenterteilung: **17.02.2021**
(21) Anmeldenummer: 15198166.9
(22) Anmeldetag: 07.12.2015
(51) Int. Cl.: H01M 10/04, H01M 10/42, H01M 10/052

(54) **TROCKNUNGSVORRICHTUNG EINER BATTERIE, VERFAHREN ZUM BETRIEB DERSELBEN SOWIE BATTERIE UND FAHRZEUG DIESE ENTHALTEND**
DRYING DEVICE OF A BATTERY, METHOD FOR OPERATING THE SAME AND BATTERY, AND VEHICLE CONTAINING THE SAME
DISPOSITIF DE SECHAGE D'UNE BATTERIE, SON PROCEDE DE FONCTIONNEMENT ET BATTERIE ET VEHICULE LE COMPRENANT

(43) Veröffentlichungstag der Anmeldung: 14.06.2017
(73) Patentinhaber: Robert Bosch GmbH, 70442 Stuttgart (DE); GS Yuasa International Ltd., Kisshoin, Minami-ku, Kyoto-shi, Kyoto 601-8520 (JP)
(72) Erfinder: Riedmann, Matthias, 70188 Stuttgart (DE); Kohn, Peter, 70178 Stuttgart (DE); Hafenbrak, Robert, 70469 Stuttgart (DE); Greiner, Daniel Bernd, 72070 Tuebingen (DE); Wagner, Christian, 70469 Stuttgart (DE)
(74) Vertreter: Isarpatent

(56) Entgegenhaltungen:
- EP-A1- 2 533 325
- DE-A1-102014 200 789
- DE-A1-102014 203 927

## Beschreibung

### Stand der Technik

Die Erfindung geht aus von einer Trocknungsvorrichtung einer Batterie, einem Verfahren zum Betrieb derselben sowie einer Batterie und einem Fahrzeug diese enthaltend gemäß dem Oberbegriff der unabhängigen Ansprüche.

Die DE 11 2013 002 593 T5, DE 10 2010 063 423 A1 und DE 10 2011 084 351 A1 beschreiben Verfahren und Vorrichtung zur Entfeuchtung einer Batterie.

EP 2 533 325 A1 offenbart ein Batteriepaketentfeuchtungssystem zum Kontrollieren der relativen Feuchtigkeit in einer Batteriepaketumhüllung. Das System erhitzt und reaktiviert Trocknungsmittel, das in dem Batteriepaket enthalten ist, in vorbestimmten Zeitintervallen oder wenn die Feuchtigkeit in dem System ein vordefiniertes Niveau erreicht. Das Trocknungsmittel ist in einer Trocknungsmittelumhüllung enthalten. Die Trocknungsmittelumhüllung ist durch einen ersten Luftkanal mit der Batteriepaketumhüllung verbunden, sodass sich Wasserdampf von der Batteriepaketumhüllung zu der Trocknungsmittelumhüllung bewegen kann. Der Wasserdampf wird von dem Trocknungsmittel absorbiert. Eine Heizungseinrichtung, die eingerichtet ist, das Trocknungsmittel zu erwärmen und zu reaktivieren, wird durch eine Steuerung aktiviert, wenn das Trocknungsmittel seine Effektivität verliert. Die Heizungseinrichtung kann ein Heizelement, das in dem Trocknungsmittel positioniert ist, ein Heizelement, das in einer separaten Trocknungskammer angeordnet ist, und einen Ventilator umfassen.

Die DE 10 2014 203927 A1 offenbart eine Vorrichtung zur Trocknung einer Batterie. Die Vorrichtung umfasst eine Heizeinrichtung zur Erzeugung von Wärme zur Regeneration eines Trockenmittels. Das Trockenmittel nimmt Feuchtigkeit aus der Batterie durch eine Öffnung, durch die die Feuchtigkeit aus der Batterie zu dem Trockenmittel gelangen kann auf. Ein Verschlusselement kann die Öffnung mittels der erzeugten Wärme verschließen. Die Heizeinrichtung kann ein elektrisch betriebenes Heizelement sein.

Die DE 10 2014 200789 A1 offenbart ein Gehäuse für wenigstens ein Batteriemodul oder ein Batteriesystem umfassend wenigstens eine innerhalb des Gehäuses angeordnete Trocknungseinheit, welche ein Feuchtigkeit absorbierendes Trocknungsmittel aufweist, eine Temperiereinheit zur Regenerierung des Trocknungsmittels und eine Steuereinrichtung, welche zur Steuerung einer Regenerierung des Trocknungsmittels ausgebildet ist. Die Temperiereinheit ist ein die Trocknungseinheit umgebendes oder ein in die Trocknungseinheit integriertes Heizelement, insbesondere eine Heizspirale, ein Heizdraht und/oder eine Heizplatte bzw. eine Heizwendel.

### Offenbarung der Erfindung

Die Anordnung und das Verfahren zur Entfeuchtung einer Batterie mit den Merkmalen der unabhängigen Ansprüche 1 bzw. 4
haben den Vorteil, dass damit eine zuverlässige Entfeuchtung eines elektronische, elektrische und/oder chemische Komponenten einer Batterie, eines Batteriemoduls oder einer Batteriezelle aufnehmenden Innenraums der Batterie,
des Batteriemoduls bzw. der Batteriezelle möglich ist, wodurch mittels einer erfindungsgemäßen Anordnung und/oder eines erfindungsgemäßen Verfahrens während der gesamten Lebensdauer ein derartig niedriger Feuchtigkeitsgehalt innerhalb dieses Innenraumes sichergestellt werden kann, dass die Gefahr kritischer Fehlerbilder wie beispielsweise eines Brands oder einer Explosion verringert wird.

Erfindungsgemäß wird eine Anordnung zur Entfeuchtung einer Batterie zur Verfügung gestellt, wobei die Batterie insbesondere eine Lithium-Ionen-Batterie ist. Die Trocknungsvorrichtung weist ein Gehäuse auf, in welchem ein Trockenmittel zur Einlagerung von Feuchtigkeit aufgenommen ist. Das Gehäuse weist zudem einen ersten Anschluss auf, welcher zu einer fluidleitenden Verbindung mit der Batterie ausgeführt ist. Weiterhin weist das Gehäuse einen zweiten Anschluss auf, welcher zu einem Ausströmen von Fluid in die Umgebung des Gehäuses eingerichtet ist. Die Trocknungsvorrichtung weist des Weiteren ein zu einem fluiddichten Verschließen oder Öffnen des ersten Anschlusses eingerichtetes erstes Ventilelement auf. Weiterhin weist die Trocknungsvorrichtung ein zu einem fluiddichten Verschließen oder Öffnen des zweiten Anschlusses eingerichtetes zweites Ventilelement auf.

Insbesondere kann unter einer Batterie auch eine Batteriezelle oder ein Batteriemodul verstanden sein, so dass mit der erfindungsgemäßen Trocknungsvorrichtung auch der Innenraum eines Gehäuses der Batteriezelle oder des Batteriemoduls entfeuchtet werden kann.

Insbesondere ist unter dem fluiddichten Verschließen eines der Anschlüsse zu verstehen, dass das jeweilige erste bzw. zweite Ventilelement derart angeordnet ist, dass kein Fluid, also kein Gas und keine Flüssigkeit, durch diesen Anschluss hindurch strömen kann. Mit anderen Worten ausgedrückt bedeutet dies, dass das erste bzw. zweite Ventilelement den jeweils zugehörigen ersten bzw. zweiten Anschluss vollständig verschließt.

Insbesondere ist unter dem Öffnen eines der Anschlüsse zu verstehen, dass das jeweilige erste bzw. zweite Ventilelement derart angeordnet ist, dass Fluid, also Gas und/oder Flüssigkeit, durch diesen Anschluss hindurch strömen kann. Dabei ist es möglich, dass das erste bzw. zweite Ventilelement den jeweils zugehörigen ersten bzw. zweiten Anschluss nur teilweise öffnet, wobei das erste bzw. zweite Ventilelement diesen bevorzugt vollständig öffnet.

Durch die in den abhängigen Ansprüchen aufgeführten Maßnahmen sind vorteilhafte Weiterbildungen und Verbesserungen der im unabhängigen Anspruch angegebenen Vorrichtung oder des im unabhängigen Anspruch angegeben Verfahrens möglich.

Es ist zweckmäßig, wenn das erste Ventilelement und das zweite Ventilelement miteinander verbunden sind. Dabei können das erste Ventilelement und das zweite Ventilelement mechanisch miteinander verbunden sein und/oder regelungstechnisch miteinander verbunden sein. Dadurch ist es möglich, das fluiddichte Verschließen und das Öffnen des ersten Anschlusses und des zweiten Anschluss mittels des ersten Ventilelements und des zweiten Ventilelements aufeinander abzustimmen. Dabei sind das erste Ventilelement und das zweite Ventilelement derart miteinander verbunden, dass die Trocknungsvorrichtung bevorzugt zwei Zustände für die Anordnung des ersten Ventilelements und des zweiten Ventilelements aufweist, wobei unter der Anordnung eines der Ventilelemente das Öffnen und das fluiddichte Verschließen des ersten Anschlusses und des zweiten Anschlusses verstanden sein soll.

In einem ersten Zustand verschließt das erste Ventilelement den ersten Anschluss fluiddicht und das zweite Ventilelement öffnet den zweiten Anschluss. Dadurch kann kein Fluid, insbesondere keine Feuchtigkeit, aus einem Innenraum der Batterie durch den ersten Anschluss in das das Trockenmittel aufnehmende Gehäuse der Trocknungsvorrichtung einströmen. Des Weiteren kann Fluid aber aus dem Gehäuse der Trocknungsvorrichtung durch den zweiten Anschluss in die Umgebung des Gehäuses abströmen. Dadurch ist es in dem ersten Zustand der Anordnung des ersten Ventilelements und des zweiten Ventilelements möglich, mit Feuchtigkeit beladenes Trockenmittel durch Abgabe von Feuchtigkeit an die Umgebung der Trocknungsvorrichtung zu entfeuchten. Insbesondere ist es vorteilhaft, wenn die Trocknungsvorrichtung während eines Betriebes der Batterie in dem ersten Zustand angeordnet ist, so dass das Trockenmittel regeneriert werden kann. Dabei kann eine während des Betriebes der Batterie entstehende Wärme für die Regeneration des Trockenmittels verwendet werden.

In einem zweiten Zustand öffnet das erste Ventilelement den ersten Anschluss und das zweite Ventilelement verschließt den zweiten Anschluss fluiddicht. Dadurch kann Fluid, insbesondere Feuchtigkeit, aus einem Innenraum der Batterie durch den ersten Anschluss in das das Trockenmittel aufnehmende Gehäuse der Trocknungsvorrichtung einströmen. Des Weiteren kann aber kein Fluid, insbesondere keine Feuchtigkeit, aus dem Gehäuse der Trocknungsvorrichtung durch den zweiten Anschluss in die Umgebung des Gehäuses abströmen. Dadurch ist es in dem zweiten Zustand der Anordnung des ersten Ventilelements und des zweiten Ventilelements möglich, das Trockenmittel mit Feuchtigkeit aus einem Innenraum der Batterie zu beladen, um somit den Innenraum der Batterie zu entfeuchten. Insbesondere ist es vorteilhaft, wenn die Trocknungsvorrichtung während eines Ruhezustandes der Batterie in dem zweiten Zustand angeordnet ist, so dass der Innenraum Batterie zuverlässig entfeuchtet wird.

Zur Entfeuchtung des Innenraums der Batterie sind das erste Ventilelement und das zweite Ventilelement also in dem zweiten Zustand angeordnet und zur Entfeuchtung des Trockenmittels in dem ersten Zustand. Insgesamt bietet dies insbesondere den Vorteil, dass eine Entfeuchtung des Innenraums der Batterie möglich ist, ohne eine unmittelbare fluidleitende Verbindung zwischen der Umgebung und der Batterie herzustellen, denn bei der Entfeuchtung der Batterie ist das zweite Ventilelement geschlossen und bei der Entfeuchtung des Trockenmittels ist das erste Ventilelement geschlossen. Dadurch ist eine Entfeuchtung der Batterie ohne das Risiko des Feuchtigkeitseintrags aus der Umgebung möglich.

Erfindungsgemäß ist die Anordnung mit einer Wärmequelle verbunden. Die Wärmequelle kann dabei die nicht mehr benötigte Abwärme einer Leistungselektronik oder eines Abgasstranges desFahrzeuges sein. Die Wärmequelle dient dazu, insbesondere bei der Anordnung der Trocknungsvorrichtung in dem ersten Zustand die Regeneration des Trockenmittels durch den zusätzlichen Wärmeeintrag zu unterstützen. Damit ist es vorteilhaft möglich, insbesondere bei Hybrid-, Plug-In Hybrid- und Elektrofahrzeugen bereits im Fahrzeug existierende Wärmequellen für das Ausheizen des Trockenmittels zu verwenden.

Insbesondere ist es vorteilhaft, wenn das Trockenmittel ein Zeolith ist, welcher bevorzugt eine große innere Oberflächenstruktur aufweist und dadurch Feuchtigkeit einlagern kann. Dies hat den Vorteil, dass das Trockenmittel Feuchtigkeit durch Adsorption einlagern kann und dadurch verhindert, dass bei geöffnetem ersten Ventilelement Feuchtigkeit aufgrund von Druck-und/oder Konzentrationsgradienten wieder zurück in die Batterie strömt.

Die im Zusammenhang mit der bisher beschriebenen Trocknungsvorrichtung erwähnten Vorteile und Weiterbildungen gelten selbstverständlich auch im Zusammenhang mit dem im Folgenden beschriebenen Verfahren zur Entfeuchtung einer Batterie.

Weiterhin betrifft die Erfindung ein Verfahren zur Entfeuchtung einer Batterie mit einer oben beschriebenen, erfindungsgemäßen Anordnung. Dabei wird zu einer Entfeuchtung des Trockenmittels der erste Anschluss mit dem ersten Ventilelement fluiddicht verschlossen und der zweite Anschluss durch das zweite Ventilelement geöffnet. Dadurch sind das erste Ventilelement und das zweite Ventilelement also in dem ersten Zustand angeordnet. Somit kann, wie bereits im Zusammenhang mit der erfindungsgemäßen Trocknungsvorrichtung beschrieben, Feuchtigkeit durch den zweiten Anschluss ausströmen und damit das Trockenmittel regenerieren.

Des Weiteren wird dabei zu einer Entfeuchtung der Batterie der zweite Anschluss mit dem zweiten Ventilelement fluiddicht verschlossen und der erste Anschluss durch das erste Ventilelement geöffnet. Dadurch sind das erste Ventilelement und das zweite Ventilelement also in dem zweiten Zustand angeordnet. Somit kann, wie bereits im Zusammenhang mit der erfindungsgemäßen Trocknungsvorrichtung beschrieben, Feuchtigkeit durch den ersten Anschluss aus einem Innenraum der Batterie in das Gehäuse der Trocknungsvorrichtung zu dem dort aufgenommen Trockenmittel strömen und in diesem eingelagert werden.

Von Vorteil ist es dabei, wenn die Wärmequelle zur Entfeuchtung des Trockenmittels eingerichtet wird. Dazu sind das erste Ventilelement und das zweite Ventilelement in dem ersten Zustand angeordnet, also verschließt das erste Ventilelement den ersten Anschluss fluiddicht und das zweite Ventilelement öffnet den zweiten Anschluss. Dadurch ist es möglich, dass die Wärmequelle, welche, wie bereits erwähnt auch als Wärmespeicher ausgebildet sein kann, das Trockenmittel ausheizt. Dabei soll unter Ausheizen verstanden sein, dass die von der Wärmequelle dem Inneren des Gehäuses der Trocknungsvorrichtung zugeführte thermische Energie zumindest teilweise von den an einer Oberfläche des Trockenmittels adsorbierten Feuchtigkeitsmolekülen zur Überwindung der Bindungsenergie aufgenommen werden kann, um bei einem ausreichend hohen Energiezustand wieder desorbieren zu können. Der so von der Wärmequelle unterstützte Desorptionsvorgang dient damit der Regeneration des Trockenmittels.

Bevorzugt wird die Batterie mit der Trocknungsvorrichtung in einem Fahrzeug wie insbesondere einem Hybrid-, Plug-In-Hybrid- und Elektrofahrzeug oder einem Kraftfahrzeug angeordnet.
Gemäß einem Aspekt der Erfindung werden das erste Ventilelement und das zweite Ventilelement während einer Ruhezeit des Fahrzeugs in dem zweiten Zustand angeordnet. Unter einer Ruhezeit des Fahrzeugs soll dabei ein Zustand verstanden sein, in welchem das Fahrzeug über einen derart langen Zeitraum nicht bewegt wird, dass die Fahrzeugkomponenten, insbesondere die Wärmequellen, abgekühlt sind, und damit im Wesentlichen die gleiche Temperatur wie die Umgebung aufweisen. Dadurch kann die Batterie während einer solchen Ruhezeit entfeuchtet werden.
Gemäß einem anderen Aspekt der Erfindung werden das erste Ventilelement und das zweite Ventilelement während eines Betriebes des Fahrzeugs in dem ersten Zustand angeordnet. Unter einem Betrieb des Fahrzeugs soll dabei ein Zustand verstanden sein, in welchem das Fahrzeug über einen derart langen Zeitraum bewegt wird, dass die Fahrzeugkomponenten, insbesondere die Wärmequellen, erwärmt sind, und damit im Wesentlichen gegenüber der Umgebung eine erhöhte Temperatur aufweisen. Dadurch kann das Trockenmittel während des Betriebes entfeuchtet werden. Bevorzugt können die eine erhöhte Temperatur aufweisenden Wärmequellen dazu verwendet werden, dass Trockenmittel auszuheizen.
Insbesondere ist es möglich, die Batterie zuverlässig zu entfeuchten, wenn wie gemäß dem einen Aspekt der Erfindung das erste Ventilelement und das zweite Ventilelement während einer Ruhezeit des Fahrzeuges in dem zweiten Zustand angeordnet werden und wie gemäß dem anderen Aspekt der Erfindung das erste Ventilelement und das zweite Ventilelement während des Betriebes des Fahrzeuges in dem ersten Zustand angeordnet werden.
Gemäß einem weiteren Aspekt der Erfindung ist es auch möglich, die Batterie während des Betriebes des Fahrzeuges durch die Anordnung des ersten Ventilelements und des zweiten Ventilelements in dem zweiten Zustand zu entfeuchten. Weiterhin ist es gemäß dem weiteren Aspekt der Erfindung auch möglich, das Trockenmittel während der Ruhephase des Fahrzeuges durch die Anordnung des ersten Ventilelements und des zweiten Ventilelements in dem ersten Zustand zu entfeuchten. Dabei kann insbesondere eine als Wärmespeicher ausgebildete Wärmequelle, die während des Betriebes entstehende Abwärme speichern und für die Ausheizung des Trockenmittels wieder abgeben.

Insbesondere durch eine über die Betriebsdauer stetig zwischen dem ersten Zustand und dem zweiten Zustand wechselnde Anordnung des ersten Ventilelements und des zweiten Ventilelements ist eine zuverlässige Entfeuchtung der Batterie möglich.

Weiterhin betrifft die Erfindung ein Fahrzeug, bevorzugt ein Kraftfahrzeug und insbesondere ein Hybrid-, Plug-In-Hybrid- oder Elektrofahrzeug, mit einer Batterie mit einer erfindungsgemäßen Trocknungsvorrichtung.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 in schematischer Schnittdarstellung eine Ausführungsform einer erfindungsgemäßen Trocknungsvorrichtung in einem ersten Zustand und
Figur 2 in schematischer Schnittdarstellung eine Ausführungsform einer erfindungsgemäßen Trocknungsvorrichtung in einem zweiten Zustand.

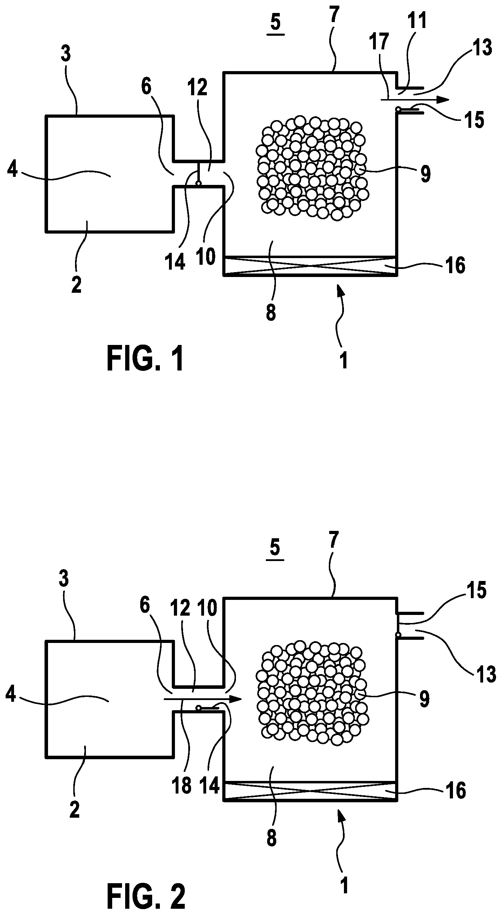

Die Figur 1 zeigt in schematischer Schnittdarstellung eine Ausführungsform einer erfindungsgemäßen Trocknungsvorrichtung 1 in einem ersten Zustand.

Weiterhin ist in der Figur 1 eine Batterie 2 zu erkennen. Die Batterie 2 weist ein Gehäuse 3 auf, welches einen die hier nicht gezeigten chemischen, elektrischen und/oder elektronischen Elemente der Batterie 2 aufnehmenden Innenraum 4 ausbildet. Der Innenraum 4 ist, wie aus der Figur 1 zu erkennen ist, gegenüber der Umgebung 5 im Wesentlichen abgeschlossen. Dabei sorgt lediglich eine Öffnung 6 dafür, dass der Innenraum 4 nicht vollständig abgeschlossen ist. Dabei soll unter im Wesentlichen gegenüber der Umgebung 5 abgeschlossen verstanden sein, dass die Öffnung 6 wie später noch beschrieben weder in dem ersten Zustand noch in dem zweiten Zustand unmittelbar fluidleitend mit der Umgebung 5 verbunden ist.

Die Trocknungsvorrichtung 1 weist ein Gehäuse 7 auf. Das Gehäuse 7 bildet dabei einen Innenraum 8 aus, in welchem ein Trockenmittel 9 aufgenommen ist. Das Trockenmittel 9 dient dabei zur Einlagerung von Feuchtigkeit. Weiterhin ist aus der Figur 1 zu erkennen, dass das Gehäuse 7 den Innenraum 8 bis auf eine erste Öffnung 10 und eine zweite Öffnung 11 vollständig abschließt.

Dabei ist die erste Öffnung 10 mit einem ersten Anschluss 12 verbunden oder die erste Öffnung 10 ist als erster Anschluss 12 ausgebildet. Der erste Anschluss 12 ist dabei fluidleitend mit der Batterie 2 verbunden. Dadurch kann Fluid durch den ersten Anschluss 12 hindurch von der Batterie 2 in das Gehäuse 7 der Trocknungsvorrichtung 1 einströmen, sollte, wie später beschrieben und in Figur 2 zu erkennen, ein erstes Ventilelement 14 den ersten Anschluss 12 öffnen. Genauer gesagt, kann dabei Fluid aus dem Innenraum 4 der Batterie 2 durch die Öffnung 6, den ersten Anschluss 12 und die erste Öffnung 10 hindurch in den Innenraum 8 des Gehäuses 7 der Trocknungsvorrichtung 1 einströmen.

Weiterhin ist dabei die zweite Öffnung 11 mit einem zweiten Anschluss 13 verbunden oder die zweite Öffnung 11 ist als zweiter Anschluss 13 ausgebildet. Der zweite Anschluss 13 ist dabei zu einem Ausströmen von Fluid in die Umgebung 5 des Gehäuses 7 eingerichtet. Dadurch kann Fluid durch den zweiten Anschluss 13 hindurch aus der Trocknungsvorrichtung 1 in die Umgebung 5 abströmen, sollte, wie später beschrieben und in Figur 1 zu erkennen, ein zweites Ventilelement 15 den zweiten Anschluss 13 öffnen. Genauer gesagt, kann dabei Fluid aus dem Innenraum 8 des Gehäuses 7 der Trocknungsvorrichtung 1 durch die zweite Öffnung 11 und den Anschluss 13 hindurch in die Umgebung 5 abströmen.

Die verwendete Begrifflichkeit des vollständigen Abschließens soll so verstanden sein, dass das jeweilige Gehäuse 3, 7 fluiddicht verschlossen ist. Elektrische und/oder elektronische Leitungen und Anschlüsse können dennoch durch das Gehäuse 3, 7 geführt sein.

An dieser Stelle sei angemerkt, dass der erste Anschluss 12 und/oder der zweite Anschluss 13 auch nur als eine Öffnung 10, 11 ausgebildet sein können, ohne dass ein, insbesondere rohrförmiges, Anschlusselement an der Öffnung 10,11 angeordnet ist. Insbesondere ist es aber vorteilhaft, wenn die Öffnung 6 und die erste Öffnung 10 durch ein rohrförmiges Verbindungselement, wie in Figur 1 dargestellt, miteinander verbunden sind, wobei in Figur 1 der erste Anschluss 12 das rohrförmige Verbindungselement ausbildet.

Weiterhin weist die Trocknungsvorrichtung 1 ein erstes Ventilelement 14 und ein zweites Ventilelement 15 auf. Dabei verschließt, bei dem in Figur 1 gezeigten ersten Zustand, das erste Ventilelement 14 den ersten Anschluss 12 fluiddicht, so dass kein Fluid von dem Innenraum 4 in den Innenraum 8 strömen kann. Dabei öffnet, bei dem in Figur 1 gezeigten ersten Zustand, das zweite Ventilelement 15 den zweiten Anschluss 13, so dass Fluid von dem Innenraum 8 in die Umgebung 5, wie durch den Pfeil mit dem Bezugszeichen 17 dargestellt, abströmen kann. Die in der Figur 1 gezeigte Anordnung ist als erster Zustand der Anordnung des ersten Ventilelements 14 und des zweiten Ventilelements 15 bezeichnet. In dem ersten Zustand kann das Trockenmittel 9 regeneriert werden.

Insbesondere weist die Trocknungsvorrichtung 1 eine Wärmequelle 16 auf, wobei die Wärmequelle 16 bei dem in Figur 1 gezeigten Ausführungsbeispiel mit der Trocknungsvorrichtung 1 verbunden ist. Dabei kann die Batterie 2 insbesondere in einem in den Figuren 1 und 2 nicht gezeigten Fahrzeug angeordnet sein und die Wärmequelle 16 kann eine Leistungselektronik oder ein Abgasstrang sein oder mit dieser Wärmequelle 16 in einem wärmeleitendem Kontakt stehen, insbesondere auch über ein geeignetes Heizfluid mit der Wärmequelle 16 in wärmeleitendem Kontakt stehen.

Bei der Regeneration desorbiert im Trockenmittel 9 eingelagerte Feuchtigkeit, insbesondere durch Wärmezufuhr der Wärmequelle 16, und strömt durch den zweiten Anschluss 13 in die Umgebung 5 ab. Da der erste Anschluss 12 durch das erste Ventilelement 14 fluiddicht verschlossen ist, kann die Feuchtigkeit nur, wie durch den Pfeil mit dem Bezugszeichen 17 dargestellt, durch den zweiten Anschluss 13 abströmen.

Die Figur 2 zeigt in schematischer Schnittdarstellung eine Ausführungsform einer erfindungsgemäßen Trocknungsvorrichtung 1 in einem zweiten Zustand.

Die in der Figur 2 gezeigte Trocknungsvorrichtung 1 unterscheidet sich von der in Figur 1 gezeigten Trocknungsvorrichtung 1 nur dadurch, dass das erste Ventilelement 14 den ersten Anschluss 12 öffnet und das zweite Ventilelement 15 den zweiten Anschluss 13 fluiddicht verschließt. Dadurch kann Feuchtigkeit, wie durch den Pfeil mit dem Bezugszeichen 18 dargestellt, aus dem Innenraum 4 der Batterie 2 in den Innenraum 8 der Trocknungsvorrichtung 1 einströmen und durch Adsorption von dem Trockenmittel 9 aufgenommen werden.

An dieser Stelle sei noch angemerkt, dass das erste Ventilelement 14 und das zweite Ventilelement 15, insbesondere regelungstechnisch, beispielsweise miteinander verbunden sind und eine hier nicht gezeigte Regeleinheit das Öffnen und das fluiddichte Verschließen des ersten Anschlusses 12 und des zweiten Anschlusses 13 mittels des ersten Ventilelements 14 bzw. des zweiten Ventilelements 15 derart steuert, dass die Trocknungsvorrichtung 1 entweder zur Entfeuchtung des Trockenmittels 9 in dem, insbesondere in Figur 1 gezeigten, ersten Zustand angeordnet ist oder, zur Entfeuchtung des Innenraums 4 der Batterie 2 in dem, insbesondere in Figur 2 gezeigten, zweiten Zustand angeordnet ist.

Dabei kann die Regeleinheit derart ausgebildet sein und zusätzlich Temperaturmesselemente insbesondere zur Bestimmung der Temperatur der Wärmequelle 16 und/oder der Temperatur der Umgebung 5 umfassen, so dass, wie oben beschrieben, die Trocknungsvorrichtung 1 während des Betriebes der Batterie 2 und insbesondere des Fahrzeuges, in welchem die Batterie 2 angeordnet ist, bei einer im Vergleich zur Temperatur der Umgebung 5 erwärmten Wärmequelle 16 in dem ersten Zustand angeordnet ist und während eines Ruhezustandes der Batterie 2 und insbesondere des Fahrzeuges, wenn die Wärmequelle 16 eine zu der Umgebung 5 vergleichbare Temperatur aufweist, in dem zweiten Zustand angeordnet ist.

Insgesamt bietet die erfindungsgemäße Trocknungsvorrichtung 1 den Vorteil, dass zuverlässige eine dauerhafte Entfeuchtung der Batterie 2 möglich ist, ohne zusätzlichen Energiebedarf von der Umgebung.

Neben den bisher beschrieben Anordnungsmöglichkeiten des ersten Ventilelements 14 und des zweiten Ventilelements 15 in dem ersten Zustand bzw. dem zweiten Zustand ist es auch möglich, dass das erste Ventilelement 14 den ersten Anschluss 12 vollständig verschließt und das zweite Ventilelement 15 den zweiten Anschluss 13 vollständig verschließt. Damit kann insbesondere bei einer abgekühlten Wärmequelle 16 das Trockenmittel 1 geschont werden.

Neben den bisher beschrieben Anordnungsmöglichkeiten des ersten Ventilelements 14 und des zweiten Ventilelements 15 in dem ersten Zustand bzw. dem zweiten Zustand ist es desweiteren auch möglich, dass das erste Ventilelement 14 den ersten Anschluss 12 öffnet und das zweite Ventilelement 15 den zweiten Anschluss 13 öffnet. Damit kann insbesondere bei sehr trockenen Bedingungen der Umgebung 5 eine direkte fluidleitende Verbindung zwischen dem Innenraum 4 der Batterie 2 und der Umgebung 5 hergestellt werden, so dass eine direkte Entfeuchtung der Batterie 2 möglich ist.

An dieser Stelle sei angemerkt, dass auch eine Zwischenstellung der Ventilelemente 14, 15 zwischen einem vollständigen Öffnen und fluiddichten Verschließens eines der Anschlüsse 12, 13 mit dem jeweiligen Ventilelement 14, 15 möglich ist. Dadurch können die Fluidströme durch die Anschlüsse 12,13 geregelt werden.

## Patentansprüche

1. Anordnung zur Entfeuchtung einer Batterie (2), insbesondere einer Lithium-Ionen-Batterie, eines Fahrzeuges, mit:
einer Trocknungsvorrichtung (1) mit einem Gehäuse (7), in welchem ein Trockenmittel (9) zur Einlagerung von Feuchtigkeit aufgenommen ist,
wobei das Gehäuse (7) einen zu einer fluidleitenden Verbindung mit der Batterie (2) ausgeführten ersten Anschluss (12) und einen zu einem Ausströmen von Fluid in die Umgebung (5) des Gehäuses (7) eingerichteten zweiten Anschluss (13) aufweist,
wobei die Trocknungsvorrichtung (1) weiterhin ein zu einem fluiddichten Verschließen oder Öffnen des ersten Anschlusses (12) eingerichtetes erstes Ventilelement (14) und ein zu einem fluiddichten Verschließen oder Öffnen des zweiten Anschlusses (13) eingerichtetes zweites Ventilelement (15) aufweist,
einer Wärmequelle (16);
**dadurch gekennzeichnet, dass**
die Trocknungsvorrichtung (1) mit der Wärmequelle (16) verbunden ist, und
die Wärmequelle (16) eine Leistungselektronik oder ein Abgasstrang des Fahrzeuges ist.

2. Anordnung nach Anspruch 1,**dadurch gekennzeichnet, dass** das erste Ventilelement (14) und das zweite Ventilelement (15) miteinander verbunden sind, insbesondere regelungstechnisch miteinander verbunden sind, derart dass in einem ersten Zustand das erste Ventilelement (14) den ersten Anschluss (12) fluiddicht verschließt und das zweite Ventilelement (15) den zweiten Anschluss (13) öffnet und in einem zweiten Zustand das erste Ventilelement (14) den ersten Anschluss (12) öffnet und das zweite Ventilelement (15) den zweiten Anschluss (13) fluiddicht verschließt.

3. Anordnung nach einem der vorhergehenden Ansprüche, **dadurch gekennzeichnet, dass** das Trockenmittel (9) ein Zeolith ist.

4. Verfahren zur Entfeuchtung einer Batterie (2), insbesondere einer Lithium-Ionen-Batterie, eines Fahrzeuges, mit einer Anordnung nach einem der Ansprüche 1 bis 3, wobei zu einer Entfeuchtung des Trockenmittels (9) der erste Anschluss (12) mit dem ersten Ventilelement (14) fluiddicht verschlossen wird und der zweite Anschluss (13) durch das zweite Ventilelement (15) geöffnet wird und wobei zu einer Entfeuchtung der Batterie (2) der zweite Anschluss (13) mit dem zweiten Ventilelement (15) fluiddicht verschlossen wird und der erste Anschluss (12) durch das erste Ventilelement (14) geöffnet wird.

5. Verfahren zur Entfeuchtung einer Batterie (2) nach Anspruch 4 mit einer Anordnung nach Anspruch 2 oder 3, wobei die Wärmequelle (16) zur Entfeuchtung des Trockenmittels (9) eingerichtet wird, wobei während der Entfeuchtung des Trockenmittels (9), das erste Ventilelement (14) und das zweite Ventilelement (15) in dem ersten Zustand angeordnet sind.

6. Verfahren zur Entfeuchtung einer Batterie (2) nach einem der Ansprüche 4 oder 5 mit einer Anordnung nach Anspruch 2 oder 3, wobei die Batterie (2) in dem Fahrzeug angeordnet wird, wobei das erste Ventilelement (14) und das zweite Ventilelement (15) während einer Ruhezeit des Fahrzeugs in dem zweiten Zustand zur Entfeuchtung der Batterie (2) angeordnet werden.

7. Verfahren zur Entfeuchtung einer Batterie (2) nach einem der Ansprüche 4 bis 6 mit einer Anordnung nach Anspruch 2 oder 3, wobei die Batterie (2) in einem Fahrzeug angeordnet wird, wobei das erste Ventilelement (14) und das zweite Ventilelement (15) während eines Betriebes des Fahrzeuges in dem ersten Zustand zur Entfeuchtung des Trockenmittels (9) angeordnet werden.

8. Batterie (2), insbesondere Lithium-Ionen-Batterie, mit einer Anordnung nach einem der Ansprüche 1 bis 3 und/oder welche mit einem Verfahren nach einem der Ansprüche 4 bis 7 betrieben wird.

9. Fahrzeug, insbesondere Kraftfahrzeug, Hybrid-, Plug-In-Hybrid- oder Elektrofahrzeug, mit einer Batterie (2) nach Anspruch 8.

## Claims

1. Arrangement for removing moisture from a battery (2), in particular a lithium-ion battery, of a vehicle, comprising:
a drying apparatus (1) having a housing (7) in which a desiccant (9) for retaining moisture is accommodated,
wherein the housing (7) has a first connection (12) which is guided out for fluid-conducting connection to the battery (2) and has a second connection (13) which is designed for outflow of fluid into the area (5) surrounding the housing (7),
wherein the drying apparatus (1) further has a first valve element (14) which is designed to close in a fluid-tight manner or open the first connection (12) and a second valve element (15) which is designed to close in a fluid-tight manner or open the second connection (13),
a heat source (16);
**characterized in that**
the drying apparatus (1) is connected to the heat source (16), and
the heat source (16) is a power electronics system or an exhaust gas section of the vehicle.

2. Arrangement according to Claim 1, **characterized in that** the first valve element (14) and the second valve element (15) are connected to one another, in particular are connected to one another for control purposes, in such a way that, in a first state, the first valve element (14) closes the first connection (12) in a fluid-tight manner and the second valve element (15) opens the second connection (13) and, in a second state, the first valve element (14) opens the first connection (12) and the second valve element (15) closes the second connection (13) in a fluid-tight manner.

3. Arrangement according to either of the preceding claims, **characterized in that** the desiccant (9) is a zeolite.

4. Method for removing moisture from a battery (2), in particular a lithium-ion battery, of a vehicle, comprising an arrangement according to one of Claims 1 to 3, wherein, for the purpose of removing moisture from the desiccant (9), the first connection (12) is closed in a fluid-tight manner by the first valve element (14) and the second connection (13) is opened by the second valve element (15) and wherein, for the purpose of removing moisture from the battery (2), the second connection (13) is closed in a fluid-tight manner by the second valve element (15) and the first connection (12) is opened by the first valve element (14) .

5. Method for removing moisture from a battery (2) according to Claim 4 comprising an arrangement according to Claim 2 or 3, wherein the heat source (16) is designed to remove moisture from the desiccant (9), wherein the first valve element (14) and the second valve element (15) are arranged in the first state during the removal of moisture from the desiccant (9).

6. Method for removing moisture from a battery (2) according to either of Claims 4 and 5 comprising an arrangement according to Claim 2 or 3, wherein the battery (2) is arranged in the vehicle, wherein the first valve element (14) and the second valve element (15) are arranged in the second state for removing moisture from the battery (2) during an inoperative time of the vehicle.

7. Method for removing moisture from a battery (2) according to one of Claims 4 to 6 comprising an arrangement according to Claim 2 or 3, wherein the battery (2) is arranged in a vehicle, wherein the first valve element (14) and the second valve element (15) are arranged in the first state for removing moisture from the desiccant (9) during operation of the vehicle.

8. Battery (2), in particular lithium-ion battery, comprising an arrangement according to one of Claims 1 to 3 and/or which is operated by a method according to one of Claims 4 to 7.

9. Vehicle, in particular motor vehicle, hybrid, plug-in hybrid or electric vehicle, having a battery (2) according to Claim 8.

## Revendications

1. Agencement permettant de déshumidifier une batterie (2), en particulier d'une batterie lithium-ion, d'un véhicule, comprenant :
un dispositif de séchage (1) doté d'un boîtier (7) dans lequel est reçu un agent déshydratant (9) pour stocker de l'humidité,
le boîtier (7) présentant un premier branchement (12) réalisé pour une communication de fluide avec la batterie (2) et un deuxième branchement (13) aménagé pour un écoulement de fluide dans l'environnement (5) du boîtier (7),
le dispositif de séchage (1) présentant en outre un premier élément de soupape (14) aménagé pour une fermeture étanche au fluide ou une ouverture du premier branchement (12), et un deuxième élément de soupape (15) aménagé pour une fermeture étanche au fluide ou une ouverture du deuxième branchement (13),
une source de chaleur (16);
**caractérisé en ce que**
le dispositif de séchage (1) est relié à la source de chaleur (16), et
la source de chaleur (16) est une électronique de puissance ou une conduite de gaz d'échappement du véhicule.

2. Agencement selon la revendication 1, **caractérisé en ce que** le premier élément de soupape (14) et le deuxième élément de soupape (15) sont reliés l'un à l'autre, en particulier reliés l'un à l'autre en termes de régulation, de telle sorte que dans un premier état, le premier élément de soupape (14) ferme le premier branchement (12) de manière étanche au fluide, et le deuxième élément de soupape (15) ouvre le deuxième branchement (13), et dans un deuxième état, le premier élément de soupape (14) ouvre le premier branchement (12) et le deuxième élément de soupape (15) ferme le deuxième branchement (13) de manière étanche au fluide.

3. Agencement selon l'une quelconque des revendications précédentes, **caractérisé en ce que** l'agent déshydratant (9) est une zéolite.

4. Procédé permettant de déshumidifier une batterie (2), en particulier une batterie lithium-ion, d'un véhicule, par un agencement selon l'une quelconque des revendications 1 à 3, dans lequel, en vue d'une déshumidification de l'agent déshydratant (9), le premier branchement (12) est fermé de manière étanche au fluide par le premier élément de soupape (14) et le deuxième branchement (13) est ouvert par le deuxième élément de soupape (15), et dans lequel, en vue d'une déshumidification de la batterie (2), le deuxième branchement (13) est fermé de manière étanche au fluide par le deuxième élément de soupape (15) et le premier branchement (12) est fermé par le premier élément de soupape (14).

5. Procédé permettant de déshumidifier une batterie (2) selon la revendication 4 par un agencement selon la revendication 2 ou 3, dans lequel la source de chaleur (16)est aménagée pour déshumidifier l'agent déshydratant (9), le premier élément de soupape (14) et le deuxième élément de soupape (15) étant disposés dans le premier état pendant la déshumidification de l'agent déshydratant (9).

6. Procédé permettant de déshumidifier une batterie (2) selon l'une quelconque des revendications 4 et 5 par un agencement selon la revendication 2 ou 3, la batterie (2) étant disposée dans le véhicule, le premier élément de soupape (14) et le deuxième élément de soupape (15) étant disposés dans le deuxième état pour déshumidifier la batterie (2) pendant un temps d'arrêt du véhicule.

7. Procédé permettant de déshumidifier une batterie (2) selon l'une quelconque des revendications 4 à 6 par un agencement selon la revendication 2 ou 3, dans lequel la batterie (2) est disposée dans un véhicule, le premier élément de soupape (14) et le deuxième élément de soupape (15) étant disposés dans le premier état pour déshumidifier l'agent déshydratant (9) pendant le fonctionnement du véhicule.

8. Batterie (2), en particulier batterie lithium-ion, comprenant un agencement selon l'une quelconque des revendications 1 à 3 et/ou qui fonctionne selon un procédé selon l'une quelconque des revendications 4 à 7.

9. Véhicule, en particulier véhicule automobile, véhicule hybride, hybride rechargeable ou électrique, comprenant une batterie (2) selon la revendication 8.
